# EUROPÄISCHE PATENTSCHRIFT

(11) **EP 1 747 252 B1**
(45) Veröffentlichungstag und Bekanntmachung des Hinweises auf die Patenterteilung: **31.03.2010**
(21) Anmeldenummer: 05742659.5
(22) Anmeldetag: 10.05.2005
(51) Int. Cl.: C09C 3/00, C09C 3/04, C09C 3/10, C09C 1/02, D21H 19/38, D21H 17/67

(54) **OBERFLÄCHENMODIFIZIERTE ANORGANISCHE FÜLLSTOFFE UND PIGMENTE**
SURFACE-MODIFIED INORGANIC FILLERS AND PIGMENTS
CHARGES ET PIGMENTS INORGANIQUES MODIFIES EN SURFACE

(30) Priorität: 12.05.2004 DE 102004023864; 21.05.2004 DE 102004025008
(43) Veröffentlichungstag der Anmeldung: 31.01.2007
(73) Patentinhaber: Alpha Calcit Füllstoff Gesellschaft mbH, 50997 Köln (DE)
(72) Erfinder: MÜNCHOW, Dieter, Alpha Calcit Füllstoff GMBH, 50997 Köln (DE)
(74) Vertreter: Jönsson, Hans-Peter
(86) Internationale Anmeldenummer: PCT/EP2005/052112
(87) Internationale Veröffentlichungsnummer: WO 2005/111153

(56) Entgegenhaltungen:
- WO-A-2004/026973
- DE-A1- 10 209 448
- DE-A1- 19 821 089
- DE-C1- 4 312 463
- US-A- 5 910 214

## Beschreibung

Gegenstand der Erfindung ist ein Verfahren zur Herstellung oberflächenmodifizierter anorganischer Füllstoffe und Pigmente definierter Korngröße, die so erhaltenen Füllstoffe und Pigmente und ihre Verwendung.

In vielen Bereichen der Technik werden anorganische Pigmente oder Füllstoffe mit Bindemitteln in Form von Polymerdispersionen gebunden, beispielsweise bei der Herstellung von Dispersionsfarben, Klebstoffen oder Papier.

Die EP 0 515 928 B1 betrifft oberflächenmodifizierte plättchenförmige Pigmente mit verbessertem Aufrührverhalten sowie deren Herstellungsverfahren und Verwendung. Die plättchenförmigen Pigmente, beispielsweise ptättchenförmige Metalle, Metalloxide, Glimmerpigmente und sonstige plättchenförmige Substrate, werden in einem Mischgefäß unter Rühren mit einem Polyacrylat oder Polymethacrylat bzw. deren wasserlöslichen Salze und gegebenenfalls einem Lösemittel bzw. Lösemittelgemisch beschichtet.

Beispielsweise bei der Herstellung von Papier wird eine große Menge von Füllstoffen eingesetzt. Fast alle Papiere werden mit Füllstoffen versetzt, die besonders Druck- und Schreibpapieren eine gleichmäßige Formation, bessere Weiche, Weiße und Griff geben.

Naturdruckpapiere (ungestrichene Papiere) enthalten bis zu 35 Gew.-%, gestrichene Papiere 25 Gew.-% bis 50 Gew.-% Füllstoffe. Die Füllstoffmenge hängt sehr vom Verwendungszweck des Papiers ab. Stark beschwerte Papiere besitzen geringere Festigkeiten und schlechteres Leimungsvermögen.

Der Füllstoffanteil in der Papiermasse liegt üblicherweise zwischen 5 und 35 Gew.-% und besteht aus Primärpigmenten oder rezirkulierten Streichpigmenten, die von Reststreichfarben oder gestrichenem Ausschuss stammen können. Neben der Weiße des Füllstoffs, der für weiß-getönte Papiere wichtig ist, spielt die Korngröße ein wesentliche Rolle, da sie die Füllstoffausbeute stark und die physikalischen Eigenschaften des Papiers, insbesondere die Porosität beeinflusst. Der im Papier verbleibende Füllstoffanteil beträgt zwischen 20 und 80 Gew.-% der der Fasersuspension zugesetzten Menge. Die Ausbeute hängt sowohl von der Füllstoffart als auch von Stoffzusammensetzung, dem Mahlgrad, der Fixierung der Füllstoffteilchen durch Harz und Aluminiumsulfat, dem Papiergewicht, der Papiermaschinengeschwindigkeit, der Art des Wasserentzuges und der Feinheit des Siebes ab.

Entsprechend dem Verbrauch haben folgende Produkte als Füllstoff und Streichpigment heute die größere Bedeutung: Kaolin, Calciumcarbonat, künstliche Aluminiumsilikate und -oxidhydrate, Titandioxid, Satin-Weiß, Talkum und Calciumsilikat.

Die EP 0 595 723 B1 beschreibt ein Verfahren zur Herstellung von Chargenpigmenten auf Mineralbasis, **dadurch gekennzeichnet, dass** man in wässerigem Medium eine gemeinsame Mahlung eines Kompaktierungsminerals, eines Schichtminerals und/oder eines Kunststoffpigments in Gegenwart von zumindest einem Mahlhilfsmittel, umfassend zumindest ein Dispergiermittel, durchführt. Diese Druckschrift bleibt jedoch in Bezug auf die Bedingungen bei der gemeinsamen Mahlung von Mineral und Kunststoffpigment allzu vage und erwähnt nicht den Einsatz von Dispergiermitteln.

DE 102 09 448 A1 betrifft wässrige Anschlämmungen von feinteiligen Füllstoffen, die zumindest teilweise mit Polymerisaten überzogen sind, und die erhältlich sind durch Behandeln von wässrigen Anschlämmungen feinteiliger Füllstoffe mit mindestens einem Bindemittel für Papierstreichfarben, Herstellung der wässrigen Anschlämmungen und ihre Verwendung als Zusatz zum Papierstoff bei der Herstellung von füllstoffhaltigem Papier, füllstoffartigem Karton oder füllstoffhaltiger Pappe durch Entwässern des Papierstoffs.

Die WO 98/01621 beschreibt ein Verfahren zur Wiederverwertung von Füllstoffen und Streichpigmenten der Papier-, Pappe- und Kartonherstellung aus den Restwasserschlämmen der Streichereiabwässer, Deinkinganlagen, innerbetrieblichen Kläranlagen oder Abscheidevorrichtungen sowie die Verwendung einer so anfallenden Pigment-Slurry zur Herstellung einer Streichmasse für die Papierindustrie bzw. für den Masseeinsatz bei der Papierherstellung. Ein wesentliches Element der Erfindung besteht in einem Verfahren zur Wiederverwertung von Füllstoffen und Streichpigmenten der Papier-, Pappe- und Kartonherstellung aus den Restwasserschlämmen der Streichereiabwässer, Deinkinganlagen, innerbetrieblichen Kläranlagen oder Abscheidevorrichtungen, das dadurch gekennzeichnet ist, dass man die Füllstoff- und Streichpigmenthaltigen Restwasserschlämme der Vermischung und anschließend der Vermahlung zu einer Pigment-Slurry mit Frischpigment oder Frischfüllstoff als Pulver, frischpigmenthaltige und/oder frischfüllstoffhaltige Slurry zuführt.

Die Aufgabe der vorliegenden Erfindung besteht in der Verbesserung des Kontakts von anorganischen Füllstoffe und Pigmenten und Bindemitteln (Bindern) in Form von Polymerdispersionen und damit einer Verminderung der notwendigen Menge an Bindemitteln bzw. einer verbesserten Bindung der Füllstoffe oder der Pigmente untereinander und an das Substrat, zur Herstellung von Füllstoff- oder Pigment-Slurries, insbesondere in der Papierindustrie und weiteren Anwendungsgebieten, wie der Farbenindustrie oder der Klebstoffindustrie.

Erfindungsgemäß wurde gefunden, dass anorganische Pigmente definierter Korngröße, deren Oberfläche während der Vermahlung mit Bindemitteln, nachfolgend als Polymerdispersionen bezeichnet, in vielen Bereichen der Technik, beispielsweise in der Papierindustrie und der Farbenindustrie oder der Klebstoffindustrie, mit Vorteil eingesetzt werden können.

Dementsprechend besteht eine erste Ausführungsform der vorliegenden Erfindung in einem Verfahren zur Herstellung von oberflächenmodifizierten anorganischen Füllstoffen oder Pigmenten gewünschter Korngröße **dadurch gekennzeichnet, dass** man Füllstoff- oder Pigment-Slurries von anorganischen Füllstoffen oder Pigmenten mit einem Feststoffgehalt von 40 bis 95 Gew.-% unter Einwirkung von Druck- und Scherkräften unter Einsatz von
(a) Polymerdispersionen in einer Menge von 0,1 bis 50 Gew.-%, bezogen auf die Füllstoffe oder Pigmente, ausgewählt aus Naturkautschuk, Synthesekautschuk, Kunstharzen und Kunststoffen auf der Basis von Polyurethan, Styrol/Butadien, Styrol/Acrylsäure oder -ester, Styrol/Butadien/Acrylsäure oder -ester sowie Vinylacetat/Acrylsäure oder -ester und
(b) an sich bekannten Mahlhilfsmitteln und/oder Dispergiermitteln in einer Menge von mehr als 0,2 bis 0,4 Gew.-% (Wirksubstanz), bezogen auf die Füllstoffe oder Pigmente,
   auf eine Korngröße der Füllstoffe oder Pigmente von 10 bis 95 % an Teilchen < 1 µm, bezogen auf den Äquivalentdurchmesser vermahlt, die Bindemittel der Polymerdispersionen auf die Füllstoffe- oder Pigmente aufreibt und damit verfilmt.

Es wurde gefunden, dass Polymerdispersionen, die üblicherweise einen Klebeeffekt aufweisen sollten, geeignet sind, anorganische Füllstoffe und Pigmente in einer Form bereitzustellen, die gegenüber dem Stand der Technik bekannten Füllstoffen und Pigmenten gleicher Korngrößenverteilung ein erhöhtes Bindevermögen verleihen, wenn man Bindemittel mit Oberflächen von anorganischen Füllstoffen und Pigmenten während der Vermahlung der Füllstoffen und Pigmente auf die gewünschte Korngröße in Kontakt bringt. Die Bindemittel können dabei aus wiederzuverwertenden Materialien, beispielsweise Restwasserschlämmen stammen oder aber auch direkt zugesetzt werden.

Überraschenderweise wurde gefunden, das die Polymerteilchen nicht zu einem Verkleben oder Agglomerieren der Füllstoffteilchen und Pigmentteilchen führen, sondern offenbar einen feinen Film auf der Oberfläche der Füllstoffe oder Pigmente bilden, die eine sehr viel bessere Haftung untereinander und zum Substrat, beispielsweise Fasern in der Papierindustrie aufweisen.

Besonders bevorzugter Füllstoff oder Pigment zur Modifikation in Sinne der vorliegenden Erfindung ist Calciumcarbonat, insbesondere natürliches und/oder gefälltes Calciumcarbonat.

Neben Calciumcarbonat können auch weitere im Stand der Technik bekannte Füllstoffe und Pigmente eingesetzt werden, wie beispielsweise Kaolin, künstliche und/oder natürliche Aluminiumsilikate und - oxidhydrate, Titandioxid, Satin-Weiß, Dolomit, Glimmer, Metall-, insbesondere Aluminiumflakes, Bentonit, Rutil, Magnesiumhydroxid, Gips, Schichtsilikate, Talkum, Calciumsilikat sowie sonstige Steine und Erden.

Beim Aufbringen der Füllstoffe oder Pigmente, beispielsweise als Bestandteil von Streichfarbe in der Papierherstellung, wandert üblicherweise ein hoher Anteil des Bindemittels in die Papieroberfläche ab. Ein großer Teil des Bindemittels schlägt in das Rohpapier weg, bevor es zur Verfilmung kommt. Die oberste Streichschicht verarmt an Bindemitteln und es kommt zum sogenannten Rupfen. Wird jedoch das Polymerbindemittel auf den Füllstoff oder das Pigment aufgemahlen, tritt die Migration des Bindemittels nicht oder nur im geringen Maß ein; das heißt die Offsetfestigkeit (Widerstand gegen das Rupfen) ist höher, weil kein (oder wenig) Bindemittel durch Wegschlagen verloren geht. Im Stand der Technik hingegen muss der Verlust an Bindemittel durch einen erhöhten Bindemittelanteil in der Streichfarbe kompensiert werden.

Polymerdispersionen im Sinne der vorliegenden Erfindung umfassen die Harz-Feststoffe an sich und deren Dispersionen (Latices) von feinverteilten natürlichen und oder synthetischen Polymeren, insbesondere in einer Teilchengröße von 0,05 bis 6 µm. Üblicherweise liegen diese in Form von wässrigen, seltener nichtwässrigen Dispersionsmitteln vor. Eingeschlossen sind damit Dispersionen von Polymeren wie Natur(-Kautschuklatex) und Synthesekautschuk (Syntheselatex), als auch von Kunstharzen (Kunstharzdispersionen) und Kunststoffen (Kunststoffdispersionen) wie Polymerisaten, Polykondensaten und Polyadditonsverbindungen, insbesondere auf der Basis von Polyurethan, Styrol/Butadien, Styrol/Acrylsäure oder -ester, Styrol/Butadien/Acrylsäure oder -ester sowie Vinylacetat/Acrylsäure oder -ester sowie Acrylnitril-haltigen Suspensionen.

Unter den Produktbezeichnungen Basonal^{®}, Acronal^{®} und Styronal^{®} sind entsprechende Polymerdispersionen als Bindemittel für die Dispersionsfarbenindustrie und auch für die Papier- und Kartonstreicherei im Handel erhältlich. Diese Polymerdispersionen werden im Stand der Technik ohne stärkere Scherung durch Rühren in die üblicherweise neutral bis alkalisch eingestellten Füllstoff- oder Pigment-Slurries eingearbeitet, ohne dass hier eine Veränderung der Korngröße der Füllstoffteilchen oder Pigmentteilchen eintritt. Im Sinne der vorliegenden Erfindung werden diese jedoch direkt mit den anorganischen Füllstoffen und Pigmenten durch Einwirkung von Druck- und Scherkräften in Kontakt gebracht. Gleiches gilt selbstverständlich auch für die Herstellung von Füllstoff- oder Pigment-Slurries, wie beispielsweise in der Klebstoffherstellung, in denen separat kein Wasser zugegeben wird. Unter Einwirkung von Druck- und Scherkräften beim Vermahlen werden oberflächenmodifizierte anorganische Füllstoffe und Pigmente erhalten, die eine verbesserte Bindewirkung gegenüber dem Stand der Technik aufweisen. Besonders bevorzugt im Sinne der vorliegenden Erfindung ist es, die anorganischen Füllstoffe oder Pigmente in Anwesenheit der Polymerdispersionen auf die gewünschte Korngröße nass zu vermahlen. Somit ist es möglich, bei weißen Füllstoffen oder Pigmenten eine große Variation der Weiße- und GrößenVerteilung der Füllstoffe oder Pigmente herzustellen, wobei diese Variation insbesondere durch die Art und Dauer der Vermahlung gesteuert werden kann.

Die Menge der Polymerdispersionen, die mit den anorganischen Füllstoffe oder Pigmenten in Kontakt gebracht wird, ist von einer gewissen Bedeutung. So ist es im Sinne der vorliegenden Erfindung besonders bevorzugt, die anorganischen Füllstoffen oder Pigmente mit einer Menge von 0,1 bis 50, insbesondere 5 bis 15 Gew.-% Polymerdispersion (Feststoffe), bezogen auf die Menge an Pigment in Kontakt zu bringen. Die Polymerdispersionen liegen üblicherweise in wässriger oder nichtwässriger Form mit einem Feststoffgehalt von 40 bis 60 Gew.-%, insbesondere 50 Gew.-% vor.

Neben den Polymerdispersionen bringt man im Sinne der vorliegenden Erfindung weiterhin die anorganischen Füllstoffe oder Pigmente mit an sich bekannten Dispergiermitteln oder Mahlhilfsmitteln, insbesondere Polyacrylaten in Kontakt. Derartige Polyacrylate sind beispielsweise in der eingangs erwähnten EP 0 515 928 B1 beschrieben, auf die insoweit voll inhaltlich Bezug genommen wird.

Im Sinne der vorliegenden Erfindung bringt man die Füllstoffe oder Pigmente mit obengenannter Dispergiermittelwirksubstanz in einer Menge von 0,1 bis 0,4 Gew.-%, bezogen auf die Festsubstanz in Kontakt.

In den Restwasserschlämmen der Streichereiabwässer der Papier- und Deinkinganlagen, innerbetrieblichen Anlagen oder Abscheidevorrichtungen liegen die Füllstoffe und Streichpigmente häufig in agglomerierter Form und mit geringerer Weiße vor, die eine direkte Wiederverwendung in der Rohstoffaufbereitung, insbesondere im Papierstrich, einschränkt oder sogar unmöglich macht.

Mit Hilfe der vorliegenden Erfindung des oben beschriebenen Verfahrens wird eine definierte, konzentrierte Pigment-Slurry oder Füllstoffslurry auch unter Einsatz von Restwasserschlämmen erhalten, die zum Beispiel in der Papier-, Pappe- und Kartonherstellung oder Farben- und Klebstoffindustrie eingesetzt werden kann.

In der Papierherstellung ist es üblich, die Füllstoffe und Streichpigmente sowohl als Pulver oder in Form einer konzentrierten Slurry, die 50 bis 80 Gew.-% Feststoffanteile aufweist, einzusetzen. Diese Füllstoffe und Pigmente werden üblicherweise von den Herstellern mit der gewünschten Weiße und Korngrößenverteilung zur Verfügung gestellt. Ein wesentliches Element der vorliegenden Erfindung besteht nunmehr in dem Einsatz der anorganischen Füllstoffe und Pigmente in einer Art "Grundkörnung", vorzugsweise als Feststoff oder auch als hochkonzentrierte Slurry, beispielsweise mit einem Feststoffgehalt von 70 Gew.-% bis 85 Gew.-% oder mehr, beispielsweise mit einem mittleren Korndurchmesser von 50% <1 µm bis 50 % <15 µm, insbesondere 50 % <3 µm bis 50 % <8 µm und Vermahlung in Anwesenheit der Polymerdispersion insbesondere in wässriger Phase auf die gewünschte Korngröße. Somit können beispielsweise in der Papierindustrie durch Vermischung und anschließend der Vermahlung von Frischpigment oder Frischfüllstoff als Pulver, frischpigmenthaltige und/oder frischfüllstoffhaltige Slurry auf die gewünschte Weiße und Feinheit vermahlen und dann als Füllstoff oder Streichpigment eingesetzt werden. Die genannten mineralischen Füllstoffe und Pigmente werden üblicherweise in Nass- oder Trockenverfahren auf die gewünschte Korngröße vermahlen. Bei der Nassvermahlung ist naturgemäß ein Anteil Wasser erforderlich. Ein Teil oder die gesamte Menge des notwendigen Wassers zur Vermahlung der anorganischen Pigmente kann durch die Restwasserschlämme ersetzt werden kann. Üblicherweise in den Restwasserschlämmen vorliegende Agglomerate der Füllstoffe oder Pigmente stören hierbei nicht oder wenig, da diese im Verlauf des Mahlprozesses auf die gewünschten Korngrößen zerkleinert werden.

Die Pigment- und Füllstoffteilchen des Restwasserschlamms, die zum Einsatz als Füllstoff oder Pigment vorgesehen sind, wirken hierbei als Mahlhilfsmittel und Dispergierhilfsmittel für die Zerstörung der Agglomerate bei dem Mahlprozess. Gleichzeitig wirkt der Restwasserschlamm inklusive der beladenen Partikel als Dispergierhilfsmittel und Mahlhilfsmittel für die zugesetzten Füllstoffe und Pigmente bei dem Mahlprozess, so dass die an sich üblichen Mengen an Bindemitteln, Dispergierhilfsmitteln und Mahlhilfsmitteln erfindungsgemäß verringert werden können.

Dementsprechend ist es erfindungsgemäß besonders bevorzugt, den Restwasserschlamm mit einer Feststoffkonzentration von 0,02 Gew.-% bis 60 Gew.-%, insbesondere 1 Gew.-% bis 30 Gew.-% zur Vermischung und anschließender Vermahlung mit Polymerdispersion und Frischpigment oder Frischfüllstoff als Pulver, frischpigmenthaltige und/oder frischfüllstoffhaltige Slurry einzustellen. Bei einer zu geringen Konzentration wird das Wiederverwertungsverfahren unwirtschaftlich.

In den Restwasserschlämmen der Papierindustrie kann das Verhältnis von Füllstoffen und/oder Pigmenten zu Fasern in einer großen Bandbreite variieren. Besonders bevorzugt ist es im Sinne der vorliegenden Erfindung, Restwasserschlämme mit einer gegebenenfalls angereicherten Konzentration an Füllstoffen und/oder Pigmenten einzusetzen, die im Bereich von 1 Gew.-% bis 80 Gew.-%, insbesondere 20 Gew.-% bis 60 Gew.-% bezogen auf den Feststoffgehalt liegt. So kann der Faseranteil einerseits oder der Füllstoff- und/oder Pigmentanteil andererseits beispielsweise von 2 bis 98 Gew.-% oder 98 bis 2 Gew.-% variieren. Auch in der Papierindustrie sind selbstverständlich Faser-freie Restwasserschlämme erfindungsgemäß einsetzbar.

Beispielhaft seien hier die bevorzugten Zusammensetzungen verschiedener Restwasser oder Abwasserschlämme erläutert. Vorzugsweise umfasst das Abwasser aus der Produktion 0,5 bis 5 Gew.-%, insbesondere 2,5 Gew.-% Stoffverlust bei einem speziellen Frischwasserbedarf von 10 bis 100 l/kg, insbesondere 20 l/kg. Die Konzentration der Restwasserschlämme beträgt vorzugsweise 0,02 bis 5,0, insbesondere 1,5 Gew.-%. Besonders bevorzugt im Sinne der Erfindung ist hier ein Mengenverhältnis von Faseranteil zu Füllstoff und/oder Pigmentanteil von 20 zu 80 Gew.-% oder 80 zu 20 Gew.-%, insbesondere Fasern zu Pigment im Verhältnis 40 zu 60 Gew.-% eines Abwassers aus der Papier-Produktion.

Erfindungsgemäß wird eine Slurry mit einem Feststoffgehalt von 40 bis 95 Gew.-%, insbesondere 40 bis 80 Gew.-% vermahlen.

Dies erlaubt eine flexible und schnelle Reaktion auf Qualitäts- und Produktionsanforderungen, beispielsweise der verschiedenen Papierrohstoffe für die Papiermasse, die Füllstoffe oder Pigmente oder Slurries für den Vorstrich, Deckstrich und Einfachstrich oder die Pigmentierung allein, sowie die Vermischung mit anderen Füllstoffen oder Pigmenten.

Im Sinne der vorliegenden Erfindung können an sich bekannte Additive wie Netzmittel, Stabilisierungsmittel, Mahlhilfsmittel und Dispergierhilfsmittel während der Vermischung und/oder der Vermahlung der anorganischen Füllstoffe und Pigmente eingesetzt werden.

Die mit Hilfe der vorliegenden Erfindung erhältlichen Pigment-Slurries können besonders vorteilhaft in der Papierindustrie, insbesondere zur Herstellung einer Streichfarbe für den Papierstrich oder in der Papiermasse eingesetzt werden. Besonders bevorzugt ist die Verwendung zur Herstellung einer Streichpigment-Slurry für Offsetpapier. Darüber hinaus eignen sich die erfindungsgemäßen Slurries auch zur Herstellung einer Streichmasse für leichtgewichtige, gestrichene Papiere, insbesondere auch bei hoher Auftragsgeschwindigkeit, sowie zur Herstellung von Rollen-Offsetpapieren, insbesondere zur Herstellung von leichtgewichtigen, gestrichenen Rollen-Offsetpapieren, das Streichen von Karton und Spezialpapier, wie Etiketten, Tapeten, Silikonrohpapier, Selbstdurchschreibpapiere, Verpackungspapiere, sowie der Beimischung bei Tiefdruckpapieren. In diesem Sinne sind die erfindungsgemäß erhältlichen Streichpigment-Slurries, insbesondere einsetzbar im Bogenoffset, insbesondere für den Bogenoffset-Einfachstrich, Bogenoffset-Doppelstrich: Bogenoffset-Vorstrich und Bogenoffset-Deckstrich; - im Rollenoffset, insbesondere für den LWC-Rollenoffset-Einfachstrich, Rollenoffset-Doppelstrich: Rollenoffset-Vorstrich und Rollenoffset-Deckstrich; - im Tiefdruck, insbesondere für den LWC-Tiefdruck-Einfachstrich, Tiefdruck-Doppelstrich: Tiefdruck-Vorstrich und Tiefdruck-Deckstrich; - im Karton, insbesondere für den Karton-Doppelstrich: Karton-Vorstrich und Karton-Deckstrich sowie Flexo-Druck und für Spezialpapiere, insbesondere für Etiketten und flexible Verpackungen. Die erfindungsgemäßen Füllstoffe und Pigmente können auch in Papier für digitale Druckverfahren vorteilhaft eingesetzt werden.

Das Verfahren bietet die Möglichkeit, die erfindungsgemäß hergestellten Pigment-Slurries ohne Qualitätseinbuße bei den damit hergestellten Rohpapieren, Strichen und insbesondere den Endqualitäten einzusetzen.

Die vorliegende Erfindung lässt sich insbesondere auch für die Herstellung von Klebstoffen einsetzen. Klebstoffe sind bekanntermaßen nichtmetallische Stoffe, die Fügeteile durch Flächenhaftung (Adhäsion) und innere Festigkeit (Kohäsion) verbinden. Klebstoff ist ein Oberbegriff und schließt andere gebräuchliche Begriffe für Klebstoff-Arten ein, die nach physikalischen, chemischen oder verarbeitungstechnischen Gesichtspunkten gewählt werden, wie zum Beispiel Leim, Kleister, Dispersions-, Lösemittel, Reaktions-, Kontakt-Klebstoffe. Die Benennungen der Klebstoffe enthalten oft Zusätze zur Kennzeichnung von Grundstoffen (beispielsweise Stärkekleister, Kunstharzleim, Hautleim), Verarbeitungsbedingungen (beispielsweise Kaltleime, Heißsiegel- oder Schmelzklebstoffe, Montageleim), Verwendungszweck (beispielsweise Papier-Klebstoff, Holzleime, Metall-Klebstoff, Tapetenkleister, Gummi-Klebstoff) und Lieferform (beispielsweise flüssiger Klebstoff, Leimlösung, Leimpulver, Tafelleim, Leimgallerte, Kitt, Klebeband, Klebfolie).

Klebstoffe basieren überwiegend auf organische Verbindungen, aber auch anorganische Klebstoffe werden eingesetzt.

DIN 16 920 unterteilt Klebstoff-Typen in physikalisch abbindende (Leime, Kleister, Lösungsmittel, Dispersion-, Plastisol- und Schmelzklebstoffe) und chemisch abbindende (beispielsweise Cyanacrylat-Klebstoffe). Die physikalisch abbindenden Klebstoffe können Lösungsmittel-frei (Schmelzklebstoffe) oder Lösungsmittel-haltig sein. Sie binden durch Änderung des Aggregatzustands (flüssig ⇒ fest) oder durch Verdunsten der Lösungsmittel vor oder während des Verklebungsprozesses ab und sind im allgemeinen einkomponentig.

Die chemisch abbindenden, ein- oder mehrkomponentigen Reaktions-Klebstoffe können auf allen Polymerisationsreaktionen basieren: Zweikomponenten-Systeme aus Epoxidharzen und Säureanhydriden, beziehungsweise Polyaminen reagieren nach Polyadditions-, Cyanacrylate oder Methacrylate nach Polymerisations- und Systeme auf Aminoplast- oder Phenoplast-Basis nach Polykondensations-Mechanismen.

Die Palette der als Klebstoff-Rohstoffe einsetzbaren Monomeren oder Polymeren ist breit variabel und macht Verklebungen fast aller Materialien möglich. Problematisch ist vielfach das Verkleben von Kunststoffen.

Dominierendes Ziel laufender Klebstoff-Entwicklungen ist die (aus ökologischer und ökonomischer Sicht zwingende) Umstellung der organischen Lösungsmittel enthaltenden auf Lösungsmittel-freie oder Wasser als Lösungsmittel enthaltende Systeme.

Auch zur Herstellung von Farben und Lacken sind die erfindungsgemäßen Füllstoffe oder Pigmente geeignet. Besonders bevorzugt dienen die Füllstoffe oder Pigmente zur Herstellung von Dispersionsfarben und Dispersionsfarbstoffen. Unter Letzteren versteht man eine Gruppe von in Wasser schwerlöslichen synthetischen Farbstoffen (in den meisten Fällen Azo-Farbstoffe oder Antrachinon-Derivate, auch Naphtol-AS-Farbstoffe), die zusammen mit Dispergiermitteln sehr fein zermahlen zum Färben und Drucken von Acetat-, Polyester-, Polyamid-, Polyacrylnitril-, PVC- und Polyurethan-Fasern verwendet werden. Beim Färben dringen die im Färbebad molekular gelösten Farbstoffanteile durch Diffusion in die Faser ein, bilden dort eine feste Lösung und geben dadurch echte Färbungen. Eine moderne Variante ist der sogenannte Transferdruck, beim dem Dispersionsfarbstoffe von Papier thermisch auf Stoffe übertragen werden.

So ist es möglich, relative grobe anorganische Füllstoffe oder Pigmente einer feinen Vermahlung zuzuführen. Der Anwender der erfindungsgemäßen Füllstoffe und Pigmente ist dabei nicht an vorgegebene Teilchengrößen von Anbietern der Rohstoffe gebunden. In vielen Gebieten des Standes der Technik ist es üblich, fertige Füllstoff- oder Pigment-Slurries der Rohstoffanbieter mit der Zahl der Gewichtsprozent an Teilchen kleiner als 2 µm zu charakterisieren, beispielsweise als Qualität, Feinheit oder Typ 95, 90, 75, 60, 50 etc.

In vielen Bereichen der Technik spielt beim Einsatz der Füllstoffe oder Pigmente die Korngrößenverteilung eine besondere Rolle. Im Sinne der vorliegenden Erfindung ist es besonders bevorzugt, Füllstoffe oder Pigmente einzusetzen, die eine Korngrößenverteilung von 10 bis 95 Gew.-% an Teilchen < 1 µm, jeweils bezogen auf den Äquivalentdurchmesser aufweisen.

Besonders bevorzugt im Sinne der vorliegenden Erfindung sind Füllstoffe oder Pigmente mit einer Korngrößenverteilung von
a) 95 bis 100 Gew.-% an Teilchen < 20 µm und/oder
b) 50 bis 100 Gew.-% an Teilchen < 2 µm, insbesondere 50 bis 95 Gew.-% an Teilchen < 2 µm und/oder
c) 27 bis 99 Gew.-% an Teilchen < 1 µm, insbesondere 27 bis 75 Gew.-% an Teilchen < 1 µm und/oder
d) 0,1 bis 55 Gew.-% an Teilchen < 0,2 µm, insbesondere 0,1 bis 35 Gew.-% an Teilchen < 0,2 µm,
   jeweils bezogen auf den Äquivalentdurchmesser.

Nachfolgend werden bevorzugte Anwendungsgebiete des erfindungsgemäßen Verfahrens und der so erhaltenen Füllstoffe oder Pigmente erörtert.

### Farbenindustrie:

Die klassische Rezeptur einer Innendispersionsfarbe enthält in der Regel einen Anteil von rund 10% einer Polymerdispersion auf Basis Styrolacrylat. Eine klassische Fassadenfarbenrezeptur hat in der Regel einen Anteil von 18 bis 25 % einer Polymerdispersion.

Erfindungsgemäß wurde gefunden, dass unter Einsatz einer mit Polymerdispersion gecoateten Füllstoff-Slurry der Anteil der Gesamtdispersion bzw. der Harzanteil an der Endrezeptur bei gleicher Festigkeit der Rezeptur wie bisher, gesenkt werden kann, oder dass bei gleichem Harzanteil in den Rezepturen wie bisher die Festigkeit deutlich steigt. Im vorliegenden Fall wird also eine Standardrezeptur so ausgerüstet, dass 50% des in der Rezeptur enthaltenen Bindemittels ausgetauscht werden. Bedingt durch die Notwendigkeit, dass eine gecoatete Calciumcarbonatslurry als Basis für die Versuche genommen wird, wird dann analog hierzu der Feststoffanteil des Claciumcarbonats in der Standardrezeptur herangezogen und in der Vergleichsrezeptur so modifiziert, dass die bisher trocken in die Dispersion eingebrachten Füllstoffe adäquat durch die gleiche Menge auf Feststoff gerechnete Slurry eingesetzt werden. Dies hat zur Folge, dass zwei gleiche Rezepturen vorliegen, mit adäquat gleichen Mengen an Bindemitteln und gleichen Mengen an anorganischen Füllstoffen. Im letzteren Falle wurde jedoch ein Anteil wie oben beschrieben, vom bisherigen Standardrezepturanteil durch den erfindungsgemäß neu gestalteten gecoateten Carbonat-Slurry getauscht. Hieran wurde bewiesen, dass die Festigkeit adäquat des Anstrichstoffes steigt, indem hier die Waschbarkeit nach DIN zugrunde gelegt wurde. Die unter Verwendung der erfindungsgemäßen Füllstoffe oder Pigmente hergestellten Farben wiesen eine deutlich verbesserte Widerstandsfähigkeit auf.

In einem weiteren Fall wurde den Harzanteil in der Rezeptur gegenüber der Standardrezeptur um 20 Gew-% abgesenkt. Die restlichen 80 Gew-% der in der Rezeptur enthaltenen Harze wurden ersetzt, indem, absolut gesehen, diese restlichen 80 Gew-% je zur Hälfte durch Zugabe normaler Standarddispersion und in der anderen hälfte erfindungsgemäß gecoatete Carbonatslurry gemäß dem neuen Verfahren eingesetzt wurden. Auch hier wurde wieder die Waschbarkeit im Vergleich zum Standard gemessen. Die unter Verwendung der erfindungsgemäßen Füllstoffe oder Pigmente hergestellten Farben wiesen eine deutlich verbesserte Widerstandsfähigkeit auf.

### Klebstoffindustrie

Eine Klebstoffrezeptur enthält klassischerweise für einen typischen Fußbodenkleber zur Verklebung von Textil oder sonstigen Böden einen Anteil von 35% einer terpolymeren Dispersion mit einem Harzanteil von 50%.

Im vorliegenden Fall wurde ein Teil des Bindemittels gegen einen Teil auf Basis der vorliegenden Erfindung ausgetauscht, so dass der Gesamtanteil an Harz in der Rezeptur wie bisher gleich blieb, ebenso der Füllstoffanteil in der Rezeptur gegenüber Standard gleich blieb.

Bewiesen werden sollte, dass die Festigkeit gegenüber Standard sich deutlich verbessert hat.

Die so hergestellten Rezepturen wurden verwendet, indem eine Verklebung mit einem vorher festgelegten Standardteppichboden auf einem festen Untergrund vorgenommen und hinterher verglichen wurde, welche Kraft notwendig war, um die so gegeneinander verklebten Schichten zu delaminieren. Die unter Verwendung der erfindungsgemäßen Füllstoffe und Pigmente hergestellten Kleber wiesen deutlich höhere Delaminierkräfte auf.

### Papierindustrie

In der Papierindustrie werden für die Oberflächenbeschichtung üblicherweise Streichfarben verwendet, die ca. 10 Gew-% einer Polymerdispersion (Feststoff) enthalten. Im vorliegenden Fall basierte die Standardstreichfarbe auf Calciumcarbonat mit 10 Gew-% Polymerdispersion (Feststoff). Als Alternative wurde die gleiche Rezeptur mit gleichen Mengen Carbonat und Bindemittel hergestellt, wobei jedoch ein Teil der bisherigen Rezeptur modifiziert wurde, indem sowohl Bindemittel als auch Calciumcarbonat adäquat durch erfindungsgemäß gecoatete Calciumcarbonatslurry ersetzt wurde, wobei zur Coatung die gleiche Polymerdispersion verwendet wurde, die bisher lediglich als Komponente in der Rezeptur zugegeben wurde. Verglichen wurde dann anschließend die Rupffestigkeit der Beschichtung, wobei in beiden Fällen mit vor genannter Rezeptur ein Rohpapier mit ca. 14 bis 15 g/m² beschichtet wurde, einerseits mit Standard, andererseits mit der Alternative. Die Rupffestigkeit gibt Aufschluss darüber, welcher Beschichtungsfilm besser mit dem Rohpapier verbunden ist. Die Rupffestigkeit der Papiere unter Verwendung der erfindungsgemäßen Füllstoffe und Pigmente war gegenüber Standard-Füllstoffen und - Pigmenten deutlich verbessert.

Mit diesen drei Beispielen konnte dann anwendungstechnisch bewiesen werden, dass eine Coatung in flüssiger Phase des anorganischen Füllstoffes eine deutliche Verbesserung der Festigkeitswerte der Beschichtung ergibt gegenüber der traditionellen Anwendung, indem Dispersionen und anorganische Füllstoffe lediglich gemischt werden.

Eine besonders bevorzugte Anwendung der vorliegenden Erfindung betrifft den Einsatz von Restwasserschlämmen, insbesondere in der Papierindustrie.

In der Papierfabrikation treten Verluste von Streichfarben oder Streichfarbenkomponenten auf, die zwischen 4 Gew-% und 12 Gew-% des eingesetzten Materials liegen.

Diese Reststreichfarben oder Rejekte fallen hauptsächlich an Position **A** der Fig. an:
- an den Streichaggregaten z.B. durch Sortenwechsel, Abrisse, Abstellen und Wiederanfahren der Anlage,
- in der Streichfarbenaufbereitung, z.B. bei Fehlchargen, Filtrieren,
- im Rohstofflager, beim Entladen von Tankzügen, Befüllen und Entleeren von Behältern.

Solche Störungen sind mit Reinigungsarbeiten verbunden, so dass die Rejektwässer in der Regel nur geringe Feststoffgehalte um 1 - 2 Gew-% aufweisen. Die Rejekte werden meistens - wie auch im vorliegenden Fallbeispiel - ohne Trennung in einem "Reststoff-Sammelbehälter" an Pos. **B** gesammelt.

An dieser Stelle kann die Papierfabrik unterschiedliche Wege einschlagen, z.B.

### a) Der Weg zur Deponie

In den meisten Fällen - wie auch in dem hier beschriebenen Anwendungsfall - werden die Rejekte z.B. mittels Zentrifuge (Pos. **C**) oder Sedimentationsprozess (Pos. **D**) geflockt, entwässert und auf maximalen Feststoffgehalt (> 55%) gebracht und in dieser Form auf der Deponie "entsorgt". Hochwertige Einsatzstoffe wie Pigmente und Bindemittel gehen dem Produktionsprozess verloren.

### b) Rückführung in den Papierstreichprozess mit Hilfe der vorliegenden

Erfindung, bei gleichzeitigem Qualitätszugewinn für das Calciumcarbonatpigment. Dazu wird die vorliegende Erfindung in den Produktionskreislauf der Papierfabrik integriert.

Zuerst werden die Rejekte unter Zugabe von kationischen Produkten geflockt. Pigmente und koagulierter Binder werden vom Wasser getrennt. Hierfür können Sedimentationseinrichtungen (Pos. **D**) oder Dekanter (Pos. **E**) dienen. Auch das Zentrat der Zentrifuge Pos. **C** kann verwendet werden; das anfallende Klarwasser wird als Fabrikationswasser verwendet oder geht in die Kläranlage, ohne diese zu belasten.

Die Positionen **C** und **D** sind üblicherweise Teile der Papierfabrik, Position **E** ist Teil der vorliegenden Erfindung. Im hier beschriebenen Anwendungsfall kommt das aufkonzentrierte Rejekt aus dem fabrikeigenen Sedimentationstrichter in die Mahlanlage. Diese setzt sich aus folgenden Elementen zusammen:
- Pos. **F**: Pufferbehälter für geflocktes und aufkonzentriertes Rejekt,
- Pos. **G**: Silo für CaCO₃-Pulverware
- Pos. **H**: Mischer für Mischungen von trockenem CaCO₃ und Rejekt
- Pos. **I**: Vorratsbehälter für CaC0₃ Slurry
- Pos. **K**: 2-stufige Kugelmühle
- ggf. Pos. **L**: ggf. Zwischenbehälter für fertig gemahlene CaCO₃ Slurry

Dabei wird - wie im Anwendungsfall - wie folgt gearbeitet:
- Aufkonzentriertes Rejekt wird im Pufferbehälter **F** gesammelt. Fällt kein Rejekt an, wird der Behälter mit Wasser beschickt.
- Im Mischer **H** wird Rejekt und gegebenenfalls Dispergiermittel vorgelegt und dann das CaCO₃-Pulver aus dem Silo **G** bei 75 bis 80 Gew-% Feststoff dispergiert.
- Im Vorratsbehälter **I** wird die Slurry zwischengelagert und von da aus
- die Kugelmühle **K** kontinuierlich beschickt. In der Mühle wird die Slurry unter der Zugabe von Mahlhilfsmittel auf die gewünschte Feinteiligkeit vermahlen. Diese Calciumcarbonat-Slurry wird im
- Behälter **L** zwischengelagert und dieselbe Slurry anschließend, nach Kontrolle von Teilchengröße, Feststoff, Viskosität und pH-Wert mit Polymerdispersion in der Streichküche versetzt und die so geschaffene Streichfarbe in den
- Vorratsbehälter **M** der Streichanlage transportiert. Bei kontinuierlichem Betrieb kann in dem erfindungsgemäßen Verfahren auch auf die Behälter **F** und **I** verzichtet werden.

Bei der Wiederverwendung der Rejekte gemäß der vorliegenden Erfindung können theoretisch die Pigmente allein abgetrennt und rückgeführt werden. Das erfindungsgemäße Verfahren sieht aber auch eine Rückführung des Bindemittels vor, denn die Vermahlung des Pigments mit dem Bindemittel ist von entscheidender Bedeutung für die Qualität des hergestellten Carbonatpigmentes. Es ist dabei unerheblich, ob das Bindemittel in seiner ursprünglichen Form als feinverteilte Polymerdispersion oder in geflocktem, d.h. koaguliertem Zustand als Kugelhaufen vorliegt, denn auch als Koalgulat besitzt das Bindemittel sein Wirkungspotenzial. Bei der Vermahlung wird durch die mechanische Verreibearbeit zwischen den Kugeln des Bindemittels - egal ob als Einzelteilchen oder Agglomerat - auf die Pigmentteilchen aufgerieben und durch die hohe Temperatur verfilmt. Die Füllstoff- oder Pigmentteilchen sind also mit verfilmtem Bindemittel belegt.

Dieser Bindemittelanteil ist also bereits fest verankert und kann nicht mehr in das saugfähige Substrat (Rohpapier oder Rohkarton) wegschlagen. Das Wegschlagen bedeutet Verlust von Bindemittel bzw. Verarmung des Striches an Bindemittel, und damit werden z.B. Rupfwiderstand und Druckglanz geringer. Das Wegschlagen kann auch unregelmäßig erfolgen, wenn unterschiedlich saugfähigere Zonen im Rohpapier vorhanden sind. Dies führt dann zu einem fleckigen Druckbild (Mottle).

Wird dagegen wie beim erfindungsgemäßen Verfahren ein Füllstoff oder Pigment auf das Papier / den Karton aufgebracht, das bereits mit Bindemittel belegt ist, gibt es keine Migration dieses Bindemittels. Die "Ausbeute" des Bindemittels ist höher; man erhält dichtere Striche, höhere Rupffestigkeit und besseren Druckglanz bei weniger Bindemitteleinsatz. Bei homogener Verteilung des Streichpigments ist auch das Bindemittel gleichmäßig verteilt, was zu einer gleichmäßigen Druckfarbenaufnahme führt und dem Mottle entgegenwirkt. Dies ist durch Versuche und Erfahrungen mit unterschiedlichen Bindemitteln sowohl in Form von stabilisierter Polymerdispersion als auch in Form destabilisierter Bindemittel, das heißt Bindemittelagglomeraten erwiesen.

Die erfindungsgemäße Prozessdurchführung in einer üblichen Papierfabrik kann wie folgt beschrieben werden:

Silos in einer beliebigen Größe, beispielsweise von 50 bis 1000 m³ dienen zur Aufnahme und Lagerung von trockenen Füllstoffen und Pigmenten einer einheitlichen oder gegebenenfalls unterschiedlichen Grundkörnung, beispielsweise Calciumcarbonat. Durch Dosiervorrichtungen wird ein Austrag des Füllstoff- und/oder Pigmentpulvers mit anschließendem Transport gewährleistet, gegebenenfalls zu Tagessilobehälter(n), gegebenenfalls mit Reinigungsvorrichtungen. Dosierungsvorrichtungen für das/die Pulver, gegebenenfalls gesteuert durch speicherprogrammierbare Steuerungen (SPS) mit den elektronisch integrierten Rezepten bestimmen gravimetrisch und/oder volumetrisch die zur Vermischung mit Wasser, Frischwasser oder Kreislaufwasser der Papierfabrik erforderlichen Mengen der zu mischenden Bestandteile. Erfindungsgemäß kann anstelle des Frischwassers oder des Kreislaufwassers teilweise oder vollständig ein Restwasserschlamm mit einem Feststoffgehalt von insbesondere 0,02 bis 50 Gew.-%, gegebenenfalls unter Zugabe von Wasser bei höherer Konzentration des Restwasserschlamms eingesetzt werden. Dementsprechend sind gegebenenfalls erforderlich, Behälter zur Lagerung des Restwasserschlamms, Dosiervorrichtungen für den Restwasserschlamm, die die einzusetzende Menge gravimetrisch oder volumetrisch bestimmen. Daneben sind erforderlich Behälter zur Aufnahme des Gemisches aus Frischpigment oder Frischfüllstoff als Pulver, frischpigmenthaltige und/oder frischfüllstoffhaltige Slurry und Restwasserschlamm/Wasser, gegebenenfalls Mahlhilfsmittel und Dispergierhilfsmittel oder sonstige Hilfsmittel. Zur Dispergierung und Stabilitätseinstellung sind Dispergiereinrichtungen (Dissolver) oder sonstige Rührwerke erforderlich.

Die Herstellung von oberflächenmodifizierten Füllstoffen und Pigmenten kann erfindungsgemäß kontinuierlich in üblichen Rührwerkskugelmühlen, beispielsweise mit einem Inhalt von 700 bis 5000 I oder größer durchgeführt werden. Zum Einsatz kommen Mahlmedien, vorzugsweise Mahlkugeln, insbesondere mit einem Durchmesser von 1 bis 4 mm.

Zur Aufbereitung der Restwasserschlämme werden üblicherweise Siebe, vorzugsweise Bogensiebe zum Abscheiden von Verunreinigungen (Kugelbruch, Trennstoffe, Rost etc.) eingesetzt. Lasermessinstrumente dienen der Bestimmung und Steuerung der Mahlfeinheit während des Mahlvorgangs und der Rechner-gestützten Steuerung der Rührwerkskugelmühlenanlage. Gegebenenfalls sind weitere Dosierinjektionseinrichtungen zum Nachdosieren von Dispergier- und

Mahlhilfsmitteln an der Rührwerkskugelmühle erforderlich. Nach dem Austrag der Pigment-Slurry sind gegebenenfalls Siebe zur nochmaligen Trennung von Schadstoffen mit einer Größe von mehr als 20 µm erforderlich. Typischerweise weist das eingesetzte Frischpigment- und/oder Füllstoffmaterial, insbesondere eingesetztes Calciumcarbonatpulver in trockener Form einen Weißgrad nach DIN 53163 von mehr als 90 %, insbesondere einen Weißgrad von mehr als 95 % in einer Feinheit von d₉₇ ≤ 25 µm, eine Feinheit nicht größer d₉₇ ≤ 100 µm, eine Reinheit des Carbonats ≥ 98 %, einen Anteil SiO₂ ≤ 1,0, insbesondere ≤ 0,2% auf.

Wechselnde Anteile von beispielsweise Carbonat, vermischt mit Polymerdispersion werden zu einer Slurry vermahlen, die einen Feststoffgehalt aufweist, der beispielsweise auf eine gebrauchsfähige Streichfarbe eingestellt werden kann. Gegebenenfalls ist der Feststoffgehalt auch höher einstellbar, wenn die Pigment-Slurry länger zwischengelagert werden soll. Die Feinheit der Slurry wird insbesondere durch die Verweilzeit und/oder die Energieaufnahme während der Produktion in der Rührwerkskugelmühle bestimmt.

Der Weißgrad der Pigment-Slurry ergibt sich unter anderem aus dem Mischungsverhältnis Frischpigment zu Wasser oder Restwasserschlamm und insbesondere dem eingesetzten Frischpigmenttyp.

### Ausführungsbeispiele

In einem Praxisversuch konnten folgende Untersuchungen bestätigt werden:
- Papierfabrik mit einer Papiermaschine und einer Jahresproduktion von 100.000 t gestrichenem Papier.
- Papiermaschine mit on-line Streichaggregaten versehen für Vorstrich und Deckstrich.
- Gesamtpigmentverbrauch 40.000 t, davon 20.000 t CaCo₃ einer 60-er Feinheitsqualität für den Vorstrich.
- Rejektanfall 3.200 t/Jahr
- Kapazität der Anlage zur Durchführung des erfindungsgemäßen Verfahrens 24 t/Tag mit CaCO₃ (60-er Feinheit*)
- Ziel: Vermahlung von 20 t Frischpigment mit 1 t Rejekt bei einem Feststoffgehalt von 75 Gew.-%.
*(60-er Feinheit bedeuten einen Anteil von 60 Gew.-% Teilchen kleiner als 2 µm)

Die Integration der Mahlanlage beginnt mit der Sammlung der bereits geflockten und auf ca. 40 Gew.-% eingedickten Rejekte im Pufferbehälter **F,** die die Polymerdispersion bereits enthalten.

Im Mischer **H** wurde das Rejekt sowie Dispergiermittel vorgelegt und aus dem Silo G trockenes CaCO₃ (30-er Qualität) eingetragen, bis 75 Gew-% Feststoff erreicht werden. Die erhaltene Suspension wurde in den Vorratsbehälter **I** gepumpt und dort 1,8 Gew.-% eines handelsüblichen Mahlhilfsmittels (Polyacrylat), bezogen auf Pigment zugegeben.

Aus dem Vorratsbehälter **I** wurden nun die 2-stufigen Kugelmühlen **K** kontinuierlich beschickt. Dabei wurde die CaCO₃ 30-er-Qualität auf CaCO₃ 60-er-Qualität vermahlen. Für die Vermahlung mussten pro t 85 kW aufgewendet werden. Die so hergestellte Slurry mit 60-er Qualität wurde im Zwischenbehälter **L** gelagert, bis Teilchengröße, Viskosität, Feststoffgehalt und pH-Wert erfasst waren und dann in den Vorratsbehälter **M** für Vorstrichpigment der Streichküche gepumpt. Anschließend wurde auch dieses Vorstrichpigment mit ca. 16 Gew.-% (Handelsware) einer handelsüblichen Polymerdispersion (Acronal^{®}) vermischt, so dass man eine Vorstrichfarbe erhielt.

In dem hier beschriebenen Anwendungsfall setzte sich die Vorstrichfarbe beim Betriebsversuch aus 60 Gew.-% Standardcarbonat 60-er Feinheit plus 40 Gew.-% AlphaCarb^{®} 60-er Feinheit zusammen, wobei dieser Anteil von 40 Gew.-% aus 15 Gew.-% Rejekt und 25 Gew.-% CaCO₃ 30-er Feinheit bestand, so dass der Anteil des Rejekts an der Vorstrichfarbe bei ca. 7 Gew.-% Rejekt lag. Bei einer Streichgeschwindigkeit von 820 m/min. wurden an der Filmpresse im Vorstrich 10 - 11 g/m²/Seite aufgebracht. Das Laufverhalten der Streichfarbe auf der Filmpresse war einwandfrei und der Deckstrich wurde streifenfrei aufgebracht.

Die so gestrichene Versuchsanfertigung wurde mit Standard-beschichtetem Papier verglichen.

### Ergebnis:

Striche mit dem erfindungsgemäßen Pigment lieferten gegenüber Strichen mit dem Standard 60-er Pigment
- einen höheren Rupfwiderstand bei Offsettest von Note 1 gegenüber Note 2,
- einen höheren Druckfarbenglanz von 82 gegenüber 75,
- ein langsameres Wegschlagverhalten der Druckfarbe um ca. 15 sec. nach dem Prüfbau Wegschlagtest,
- eine bessere Druckgleichmäßigkeit (visuell beurteilt) von Note 2 gegenüber Note 3.

Auch bei der optischen und sensorischen Prüfung unter Einsatz des erfindungsgemäßen Verfahrens hergestellten Papiere wurden bei den Versuchspapieren eine ausgezeichnete Qualität festgestellt.

### Beispiele für die Vermahlung von CaCO₃ mit Streichfarbe:

Zur Herstellung einer Calciumcarbonat-Pigment-Slurry mit einem Feinanteil von mehr als 90 Gew.-% < 2 µm wurde in einer Kugelmühle unter Verwendung von Calcicell^{®}30 eine wässrige anionische Copolymerdispersion auf der Basis von N-Butyl-Acrylat, Acrylnitril und Styrol, frei von Weichmachern und Lösemitteln (Acronal®S360 D) eingesetzt. Diese Polymerdispersion hatte einen Feststoffgehalt von ca. 50 Gew.-% und einen pH-Wert von etwa 8.

Die Menge an Calciumcarbonat Calcicell^{®}30 im Slurry betrug 75 Gew.-%. Als Mahlkugeln wurden SAZ-Kugeln mit einem Durchmesser von 1,6 bis 2,5 mm eingesetzt. Der Nutzinhalt der Mühle betrug 3 I. Die Arbeitsleistung 1,3 kW bei einer Drehzahl von 400 bis 1500 U/min.

Zu dem Calciumcarbonat und Wasser in den in der Tabelle 1 genannten Mengen, wurde eine aufkonzentrierte Streichfarbe (68,7 Gew.-% Feststoffgehalt) beigegeben. Um die Slurry herzustellen, wurden den Ansätzen jeweils 1 Gew.-% der obengenannten Polymerdispersion (Berechnungsgrundlage Füllstoffanteil) beigegeben.

Die nachfolgende Tabelle 1 zeigt das Versuchsprogramm:

**Tabelle 1:**

| Beispiel | Wasser | Streichfarbe | Füllstoff Calcicell^{®}30 |
|---|---|---|---|
| 2 | 500 g | 0 g | 1500 g |
| 3 | 971 g | 29 g | 3000 g |
| 4 | 706,5 g | 43,5 g | 2250 g |
| 5 | 663 g | 87 g | 2010 g |
| 6 | 619,5 g | 130,5 g | 1890 g |
| 7 | 576 g | 174 g | 1320 g |

Die Feinheit der eingesetzten Materialien wurde nach der Laserbeugungsmethode mit Gerät Cilas bestimmt:

### Messung des verwendeten Roh-Calciumcarbonats:

| | |
|---|---|
| D50 | 4,63 µm |
| D100 | 27,83 µm |
| < 1µm | 15,30 % |
| < 2µm | 30,20 % |

### Messung der verwendeten Streichfarbe:

| | |
|---|---|
| D50 | 1,17 µm |
| D100 | 9,95 µm |
| < 1µm | 41,50 % |
| < 2µm | 76,10 % |

### Beispiel 2:

Es ergaben sich folgende Analysenergebnisse mit reinem Wasser:

| | |
|---|---|
| Kugelmenge: | 2,0 l |
| Slurrymenge: | 0,9 l |
| Drehzahl: | ca. 1100 U/min |

Die Proben zur Messung der Kornverteilung wurde nach 20, 40, 60, 80, 100 bzw. 120 min genommen. Während des Mahlversuches wurde die Mühle mit Wasser gekühlt.

**Tabelle 2:**

| Auswertung der Cilas 850/1 Messungen: | | | |
|---|---|---|---|
| Zeit/min | D50/µm | D100/µm | < 2 µm/% |
| 20 | 1,85 | 8,98 | 53,4 |
| 40 | 1,70 | 7,97 | 58,2 |
| 60 | 1,31 | 5,96 | 73,0 |
| 80 | 1,13 | 4,48 | 81,9 |
| 100 | 1,04 | 4,46 | 84,9 |
| 120 | 1,20 | 7,84 | 81,6 |

Farbwerte (Meßgerät Elrepho) des Füllstoffs aus dem Slurry nach 120 min:
Rx = 90,3 / Ry = 90,1 / Rz 0 88,8 / BGW = -1,7

### Viskositätsmessung (Probe nach 120 min):

| | |
|---|---|
| Temperatur: | 20 °C |
| Viskosimeter: | Brookfield HBTD |

**Tabelle 3:**

| Spindel 2: | | | |
|---|---|---|---|
| Speed | 100 | 50 | 20 |
| Anzeige | 2,2 | 1,0 | 0,4 |
| Viskosität | 70,4 mPa*s | 64,0 mPa*s | 64,0 mPa*s |

### Beispiel 3:

**Tabelle 4:**

| Auswertung der Cilas 850/1 Messungen: | | | |
|---|---|---|---|
| Zeit/min | D50/µm | D100/µm | <2µm |
| 20 | 1,83 | 8,96 | 53,9 |
| 40 | 1,52 | 6,97 | 63,2 |
| 60 | 1,27 | 6,43 | 72,8 |
| 80 | 1,09 | 4,97 | 80,3 |
| 100 | 1,00 | 4,48 | 84,2 |
| 120 | 0,97 | 4,47 | 85,3 |
| 130 | 0,97 | 3,99 | 86,5 |
| 140 | 0,97 | 4,43 | 86,1 |

### Beispiel 4:

**Tabelle 5:**

| Auswertung der Cilas 850/1 Messungen: | | | |
|---|---|---|---|
| Zeit/min | D50/µm | D100/µm | <2µm |
| 20 | 1,81 | 10,0 | 54,3 |
| 40 | 1,51 | 8,0 | 64,9 |
| 60 | 1,27 | 8,0 | 75,0 |
| 80 | 1,15 | 7,0 | 80,7 |
| 100 | 1,08 | 4,96 | 84,1 |
| 110 | 1,03 | 4,48 | 85,9 |

Farbwerte (Meßgerät Elrepho) des Füllstoffs aus dem Slurry nach 110 min:
Rx = 92,2 / Ry = 92,0 / Rz = 90,7 / BGW = -1,6

### Viskositätsmessung (Probe nach 110 min):

| | |
|---|---|
| Temperatur: | 20 °C |
| Viskosimeter: | Brookfield HBTD |

**Tabelle 6:**

| Spindel 2: | | | |
|---|---|---|---|
| Speed | 100 | 50 | 20 |
| Anzeige | 2,0 | 1,1 | 0,4 |
| Viskosität | 64,0 mPa*s | 70,4 mPa*s | 64,0 mPa*s |

### Beispiel 5:

**Tabelle 7:**

| Auswertung der Cilas 850/1 Messungen: | | | |
|---|---|---|---|
| Zeit/min | D50/µm | D100/µm | <2µm |
| 20 | 1,94 | 9,96 | 51,1 |
| 40 | 1,53 | 7,96 | 64,2 |
| 60 | 1,32 | 6,94 | 72,7 |
| 80 | 1,20 | 7,65 | 77,5 |
| 100 | 1,08 | 4,97 | 80,6 |
| 120 | 0,99 | 3,98 | 87,6 |

Farbwerte (Meßgerät Elrepho) des Füllstoffs aus dem Slurry nach 120 min:
Rx = 92,4 / Ry = 92,2 / Rz = 90,9 / BGW = -1,6

### Viskositätsmessung (Probe nach 120 min):

| | |
|---|---|
| Temperatur: | 20 °C |
| Viskosimeter: | Brookfield HBTD |

**Tabelle 8:**

| Spindel 2: | | | |
|---|---|---|---|
| Speed | 100 | 50 | 20 |
| Anzeige | 1,7 | 0,8 | 0,3 |
| Viskosität | 54,4 mPa*s | 51,2 mPa*s | 48,0 mPa*s |

### Beispiel 6:

**Tabelle 9:**

| Auswertung der Cilas 850/1 Messungen: | | | |
|---|---|---|---|
| Zeit/min | D50/µm | D100/µm | <2µm |
| 20 | 1,77 | 9,96 | 55,5 |
| 40 | 1,47 | 8,91 | 65,8 |
| 60 | 1,26 | 6,95 | 74,5 |
| 80 | 1,15 | 4,98 | 80,2 |
| 100 | 1,06 | 4,96 | 84,3 |
| 120 | 1,02 | 4,92 | 86,4 |

Leichter Siebrückstand auf 40 µm Sieb, Schaumbildung, leichtes Verkleben der Kugeln.

Farbwerte (Meßgerät Etrepho) des Füllstoffs aus dem Slurry nach 120 min:
Rx = 91,7 / Ry = 91,6 / Rz = 90,4 / BGW = -1,4

### Viskositätsmessung (Probe nach 120 min):

| | |
|---|---|
| Temperatur: | 20 °C |
| Viskosimeter: | Brookfield HBTD |

**Tabelle 10:**

| Spindel 2: | | | |
|---|---|---|---|
| Speed | 100 | 50 | 20 |
| Anzeige | 1,3 | 0,6 | 0,3 |
| Viskosität | 41,6 mPa*s | 38,4 mPa*s | 48,0 mPa*s |

### Beispiel 7:

**Tabelle 11:**

| Auswertung der Cilas 850/1 Messungen: | | | |
|---|---|---|---|
| Zeit/min | D50/µm | D100/µm | <2µm |
| 20 | 1,72 | 8,96 | 57,2 |
| 40 | 1,47 | 7,94 | 67 |
| 60 | 1,28 | 5,95 | 74,7 |
| 80 | 1,21 | 5,46 | 77,7 |
| 100 | 1,18 | 5,96 | 77,9 |
| 120 | 1,02 | 4,95 | 86,3 |

Stärkerer Siebrückstand als in Beispiel 6 auf dem 40 µm Sieb. Stärkere Schaumbildung und stärkeres Verkleben der Kugeln.

### Farbwerte (Meßgerät Elrepho) des Füllstoffs aus dem Slurry nach 120 min:

Rx = 90,6 / Ry = 90,4 / Rz = 89,1 / BGW = -1,7

### Viskositätsmessung (Probe nach 120 min):

| | |
|---|---|
| Temperatur: | 20 °C |
| Viskosimeter: | Brookfield HBTD |

**Tabelle 12:**

| Spindel 2: | | | |
|---|---|---|---|
| Speed | 100 | 50 | 20 |
| Anzeige | 1,3 | 0,6 | 0,3 |
| Viskosität | 41,6 mPa*s | 38,4 mPa*s | 48,0 mPa*s |

**Tabelle 13:**

| Auswertung der Cilas 850/1 Messungen: | | | |
|---|---|---|---|
| Zeit/min | D50/µm | D100/µm | <2µm |
| 20 | 2,14 | 10,96 | 47,4 |
| 40 | 1,72 | 8,96 | 57,2 |
| 60 | 1,36 | 7,92 | 69,9 |
| 80 | 1,24 | 7,83 | 76,2 |
| 100 | 1,16 | 4,98 | 80,3 |
| 120 | 1,08 | 4,96 | 84,9 |

Farbwerte (Meßgerät Elrepho) des Füllstoffs aus dem Slurry nach 120 min:
Rx = 92,0 / Ry = 91,8 / Rz = 90,9 / BGW = -1,2

### Viskositätsmessung (Probe nach 120 min):

| | |
|---|---|
| Temperatur: | 20 °C |
| Viskosimeter: | Brookfield HBTD |

**Tabelle 14:**

| Spindel 2: | | | |
|---|---|---|---|
| Speed | 100 | 50 | 20 |
| Anzeige | 1,1 | 0,4 | 0,2 |
| Viskosität | 35,2 mPa*s | 25,6 mPa*s | 32,0 mPa*s |

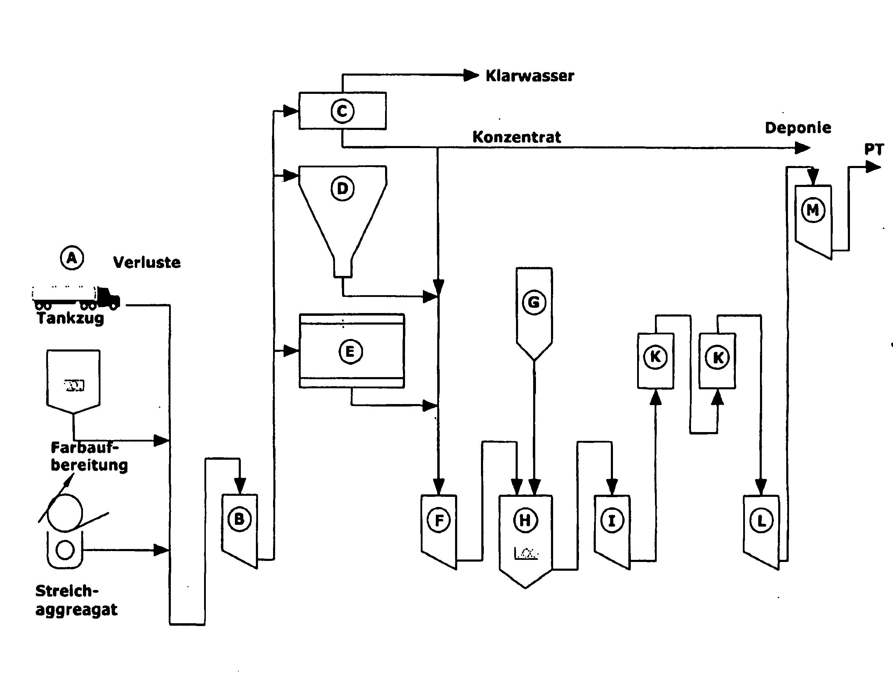

## Patentansprüche

1. Verfahren zur Herstellung von oberflächenmodifizierten anorganischen Füllstoffen oder Pigmenten gewünschter Korngröße **dadurch gekennzeichnet, dass** man Füllstoff- oder Pigment-Slurries von anorganischen Füllstoffen oder Pigmenten **mit einem Feststoffgehalt von 40 bis 95 Gew.-%** unter Einwirkung von Druck- und Scherkräften unter Einsatz von
(a) Polymerdispersionen in einer Menge von 0,1 bis 50 Gew.-%, bezogen auf die Füllstoffe oder Pigmente, ausgewählt aus Naturkautschuk, Synthesekautschuk, Kunstharzen und Kunststoffen auf der Basis von Polyurethan, Styrol/Butadien, Styrol/Acrylsäure oder -ester, Styrol/Butadien/Acrylsäure oder - ester sowie Vinylacetat/Acrylsäure oder -ester und
(b) an sich bekannten Mahlhilfsmitteln und/oder Dispergiermitteln in einer Menge von mehr als 0,2 bis 0,4 Gew.-% (Wirksubstanz), bezogen auf die Füllstoffe oder Pigmente,
auf eine Korngröße der Füllstoffe oder Pigmente **von 10 bis 95 % an Teilchen < 1 µm, bezogen auf den Äquivalentdurchmesser** vermahlt, die Bindemittel der Polymerdispersionen auf die Füllstoffe- oder Pigmente aufreibt und damit verfilmt.

2. Verfahren nach Anspruch 1, **dadurch gekennzeichnet, dass** man natürliches und/oder gefälltes Calciumcarbonat, Kaolin, künstliche und/oder natürliche Aluminiumsilikate und -oxidhydrate, Titandioxid, Satin-Weiß, Dolomit, Glimmer, Metall-, insbesondere Aluminiumflakes, Bentonit, Rutil, Magnesiumhydroxid, Gips, Schichtsilikate, Talkum, Calciumsilikat sowie sonstige Steine und Erden oder deren Gemische vermahlt.

3. Verfahren nach Anspruch 1 oder 2, **dadurch gekennzeichnet, dass** man Füllstoff- oder Pigment-Slurries mit einem Füllstoff- oder Pigmentgehalt von bis zu 90 Gew.-%, bezogen auf die Slurry einsetzt.

4. Verfahren nach einem der Ansprüche 1 bis 3, **dadurch gekennzeichnet, dass** man Polymerdispersionen einsetzt, die ausgewählt sind aus natürlichen und/oder synthetischen Polymeren einer Teilchengröße insbesondere von 0,005 bis 6 µm in wässrigen oder nicht-wässrigen Phasen.

5. Verfahren nach einem der Ansprüche 1 bis 4, **dadurch gekennzeichnet, dass** man die Füllstoffe und/oder Pigmente mit einer Menge von 5 bis 15 Gew.-% Polymerdispersion (Festsubstanz) bezogen auf die Menge an Pigment in Kontakt bringt.

6. Verfahren nach einem der Ansprüche 1 bis 5, **dadurch gekennzeichnet, dass** man die Füllstoffe und/oder Pigmente mit Polyacrylaten in Kontakt bringt.

7. Verfahren nach einem der Ansprüche 1 bis 6, **dadurch gekennzeichnet, dass** man die Füllstoff- und/oder Pigment-Slurries mit einer Streichpigment-Slurry und/oder einem Füllstoff- und Streichpigment-haltigen Restwasserschlamm der Streichereiabwässer, Deinkinganlagen, innerbetrieblichen Kläranlagen oder Abscheidevorrichtungen von Papier, Farben, Klebstoff oder sonstigen Fabriken in Kontakt bringt.

8. Verfahren nach Anspruch 7, **dadurch gekennzeichnet, dass** man Streichpigment-Slurry und/oder einen Füllstoff- und/oder Streichpigment-haltigen Restwasserschlamm mit einem Verhältnis von Faseranteil zu Füllstoff- und/oder Pigmentanteil von 2 bis 98 Gew.-% zu 98 bis 2 Gew.-% einsetzt.

9. Verfahren nach Anspruch 8, **dadurch gekennzeichnet, dass** man Streichpigment-Slurry und/oder einen Füllstoff- und/oder Streichpigment-haltigen Restwasserschlamm mit einer Feststoffkonzentration von 0,02 bis 80 Gew.-%, insbesondere 20 bis 70 Gew.-% einsetzt.

10. Verfahren nach **einem der Ansprüche 1 bis 9**, **dadurch gekennzeichnet, dass** man die Füllstoffe und/oder Pigmente der Slurries auf eine Korngrößenverteilung von
a) 95 bis 100 Gew. % an Teilchen < 20 µm und/oder
b) 50 bis 100 Gew. % an Teilchen < 2 µm, insbesondere 50 bis 95 Gew. % an Teilchen < 2 µm und/oder
c) 27 bis 99 Gew. % an Teilchen < 1 µm, insbesondere 27 bis 75 Gew. % an Teilchen < 1 µm und/oder
d) 0,1 bis 65 Gew. % an Teilchen < 0,2 µm, insbesondere 0,1 bis 35 Gew. % an Teilchen < 0,2 µm,
jeweils bezogen auf den Äquivalentdurchmesser, vermahlt.

11. Oberflächenmodifizierte, anorganische Füllstoffe und/oder Pigmente, erhältlich nach einem Verfahren gemäß einem der Ansprüche 1 bis **10.**

12. Verwendung der oberflächenmodifizierten Füllstoffe und/oder Pigmente nach Anspruch **11** zur Herstellung von Dispersionsfarben, Klebstoffen, Beschichtungen oder Streichmassen für die Papierindustrie, insbesondere von Streichmassen für verschiedene Segmente, wie Bogenoffset, Rollenoffset, Tiefdruck, Karton und Spezialpapiere.

## Claims

1. A process for the preparation of surface-modified inorganic fillers or pigments of a desired grain size, **characterized in that** filler or pigment slurries of inorganic fillers or pigments having a solids content of from 40 to 95% by weight are milled with the action of pressure and shear forces using
(a) polymer dispersions in an amount of from 0.1 to 50% by weight, based on said fillers or pigments, selected from natural rubber, synthetic rubber, artificial resins and plastic materials based on polyurethane, styrene/butadiene, styrene/acrylic acid or acrylate ester, styrene/butadiene/acrylic acid or acrylate ester as well as vinyl acetate/acrylic acid or acrylate ester; and
(b) per se known milling aids and/or dispersing agents in an amount of from more than 0.2 to 0.4% by weight (active ingredient), based on the fillers or pigments;
to a grain size of the fillers or pigments of from 10 to 95% of particles of < 1 µm, based on the equivalent diameter, the binders of the polymer dispersions are rubbed onto the fillers or pigments to form a film.

2. The process according to claim 1, **characterized in that** natural and/or precipitated calcium carbonate, china clay, artificial and/or natural aluminum silicates and oxide hydrates, titanium dioxide, satin white, dolomite, mica, metal flakes, especially aluminum flakes, bentonite, rutile, magnesium hydroxide, gypsum, sheet silicates, talcum, calcium silicate and other rocks and earths or mixtures thereof are milled.

3. The process according to claim 1 or 2, **characterized in that** filler or pigment slurries having a filler or pigment content of up to 90% by weight, based on the slurry, are employed.

4. The process according to any of claims 1 to 3, **characterized in that** polymer dispersions are employed which are selected from natural and/or synthetic polymers having a particle size of, in particular, from 0.005 to 6 µm in aqueous or non-aqueous phases.

5. The process according to any of claims 1 to 4, **characterized in that** said fillers and/or pigments are contacted with an amount of from 5 to 15% by weight of polymer dispersion (solids), based on the amount of pigment.

6. The process according to any of claims 1 to 5, **characterized in that** said fillers and/or pigments are contacted with polyacrylates.

7. The process according to any of claims 1 to 6, **characterized in that** said filler and/or pigment slurries are contacted with a coating pigment slurry and/or a filler and coating pigment containing residual water sludge from coating plant waste waters, deinking plants, internal water treatment plants or separators of paper, paint, adhesive or other factories.

8. The process according to claim 7, **characterized in that** a coating pigment slurry and/or a filler and/or coating pigment containing residual water sludge with a ratio of fiber content to filler and/or pigment content of from 2 to 98% by weight to from 98 to 2% by weight is employed.

9. The process according to claim 8, **characterized in that** a coating pigment slurry and/or a filler and/or coating pigment containing residual water sludge with a solids concentration of from 0.02 to 80% by weight, especially from 20 to 70% by weight, is employed.

10. The process according to any of claims 1 to 9, **characterized in that** said fillers and/or pigments of the slurries are milled to a grain size distribution of
a) from 95 to 100% by weight of particles < 20 µm; and/or
b) from 50 to 100% by weight of particles < 2 µm, especially from 50 to 95% by weight of particles < 2 µm; and/or
c) from 27 to 99% by weight of particles < 1 µm, especially from 27 to 75% by weight of particles < 1 µm; and/or
d) from 0.1 to 65% by weight of particles < 0.2 µm, especially from 0.1 to 35% by weight of particles < 0.2 µm;
respectively based on the equivalent diameter.

11. Surface-modified inorganic fillers and/or pigments obtainable by a process according to any of claims 1 to 10.

12. Use of the surface-modified fillers and/or pigments according to claim 11 for the preparation of dispersion paints, adhesives, coatings or coating compositions for the paper industry, especially of coating compositions for various segments, such as sheet-fed offset, rotary offset, intaglio printing, cardboard and special papers.

## Revendications

1. Procédé pour la préparation de charges ou pigments inorganiques modifiés en surface et ayant une granulométrie désirée, **caractérisé en ce que** des suspensions de charges ou pigments inorganiques ayant une teneur en solides de 40 à 95 pour cent en poids sont broyées sous l'action de forces de compression et de cisaillement en utilisant
(a) des dispersions de polymère dans une quantité de 0,1 à 50 pour cent en poids, par rapport aux charges ou pigments, choisis parmi le caoutchouc naturel, le caoutchouc synthétique, des résines artificielles et des matières plastiques à base de polyuréthane, styrène/butadiène, styrène/acide acrylique ou acrylate, styrène/butadiène/acide acrylique ou acrylate ou acétate de vinyle/acide acrylique ou acrylate; et
(b) des adjuvants de broyage et/ou agents de dispersion connus en soi dans une quantité de plus de 0,2 à 0,4 pour cent en poids (substance active), par rapport aux charges ou pigments;
à une granulométrie des charges ou pigments de 10 à 95 % de particules < 1 µm, relative au diamètre équivalent, les liants des dispersions de polymère sont frottés sur les charges ou pigments pour former un film.

2. Procédé selon la revendication 1, **caractérisé en ce que** l'on broie du carbonate de calcium naturel et/ou précipité, du kaolin, des silicates et oxydes hydratés d'aluminium artificiels et/ou naturels, du dioxyde de titane, du blanc satiné, de la dolomite, du mica, des flocons métalliques, en particulier d'aluminium, de la bentonite, du rutile, de l'hydroxyde de magnésium, du gypse, des phyllosilicates, de la poudre de talc, du silicate de calcium et autres minéraux et terres ou leurs mélanges.

3. Procédé selon la revendication 1 ou 2, **caractérisé en ce que** l'on utilise des suspensions de charges ou pigments contenant une quantité de charges ou pigments jusqu'à 90 pour cent en poids, par rapport à la suspension.

4. Procédé selon l'une quelconque des revendications 1 à 3, **caractérisé en ce que** l'on utilise des dispersions de polymère choisis parmi des polymères naturels et/ou synthétiques ayant une granulométrie notamment de 0,005 à 6 µm dans des phases aqueuses ou non aqueuses.

5. Procédé selon l'une quelconque des revendications 1 à 4, **caractérisé en ce que** l'on met les charges et/ou pigments en contact avec une quantité de 5 à 15 pour cent en poids de dispersion de polymère (matière solide), par rapport à la quantité de pigment.

6. Procédé selon l'une quelconque des revendications 1 à 5, **caractérisé en ce que** l'on met les charges et/ou pigments en contact avec des polyacrylates.

7. Procédé selon l'une quelconque des revendications 1 à 6, **caractérisé en ce que** l'on met les suspensions de charges et/ou pigments en contact avec une suspension de pigment de couchage et/ou une boue d'eaux résiduaires de couchage contenant des charges et des pigments de couchage, d'installations de désencrage, d'installations d'épuration internes ou de dispositifs de séparation de papier, encres, adhésifs, ou provenant d'autres usines.

8. Procédé selon la revendication 7, **caractérisé en ce que** l'on utilise une suspension de pigment de couchage et/ou une boue d'eaux résiduaires contenant des charges et/ou des pigments de couchage contenant un rapport de la proportion de fibres à la proportion de charge et/ou de pigment de 2 à 98 pour cent en poids sur 98 à 2 pour cent en poids.

9. Procédé selon la revendication 8, **caractérisé en ce que** l'on utilise une suspension de pigment de couchage et/ou une boue d'eaux résiduaires contenant des charges et/ou des pigments de couchage avec une concentration de matières solides de 0,02 à 80 pour cent en poids, en particulier de 20 à 70 pour cent en poids.

10. Procédé selon l'une quelconque des revendications 1 à 9, **caractérisé en ce que** l'on broie les charges et/ou pigments à une répartition granulométrique de
a) 95 à 100 pour cent en poids de particules < 20 µm et/ou
b) 50 à 100 pour cent en poids de particules < 2 µm, en particulier 50 à 95 pour cent en poids de particules < 2 µm, et/ou
c) 27 à 99 pour cent en poids de particules < 1 µm, en particulier 27 à 75 pour cent en poids de particules < 1 µm, et/ou
d) 0,1 à 65 pour cent en poids de particules < 0,2 µm, en particulier 0,1 à 35 pour cent en poids de particules < 0,2 µm,
respectivement par rapport au diamètre équivalent.

11. Charges et/ou pigments inorganiques modifiés en surface, pouvant être obtenus par un procédé selon l'une quelconque des revendications 1 à 10.

12. Utilisation des charges et/ou pigments modifiés en surface selon la revendication 11 pour préparer des peintures en dispersion, des adhésifs, des revêtements ou matières de couchage pour l'industrie papetière, en particulier des matières de couchage pour différentes branches comme les machines offset pour imprimer les feuilles, les rotatives offset à bobines, l'héliogravure, le carton et les papiers spéciaux.
